# EUROPEAN PATENT SPECIFICATION

(11) **EP 2 493 259 B1**
(45) Date of publication and mention of the grant of the patent: **04.09.2013**
(21) Application number: 11158659.0
(22) Date of filing: 17.03.2011
(51) Int. Cl.: H04W 76/02, H04W 8/08

(54) **Method for transmitting data between terminals of wireless communication system, node, and wireless communication system**
Verfahren zum Übertragen von Daten zwischen Endgeräten eines drahtlosen Kommunikationssystems, Knoten und drahtloses Kommunikationssystem
Procédé de transmission de données entre terminaux d'un système de communication sans fil

(30) Priority: 21.02.2011 EP 11155243
(43) Date of publication of application: 29.08.2012
(73) Proprietor: NTT DoCoMo, Inc., Chiyoda-ku Tokyo 100-6150 (JP)
(72) Inventor: Khan, Ashiq, 81669 München (DE); Katsutoshi, Kusume, 80687 München (DE); Kazuyuki, Kozu, 81927 München (DE); Weitkemper, Petra, 82110 Germering (DE); Hidekazu, Taoka, 80669 München (DE)
(74) Representative: Zimmermann, Tankred Klaus

(56) References cited:
- EP-A1- 2 264 960
- FABIAN DIEHM ET AL: "The FUTON prototype: Broadband communication through coordinated multi-point using a novel integrated optical/wireless architecture", GLOBECOM WORKSHOPS (GC WKSHPS), 2010 IEEE, IEEE, PISCATAWAY, NJ, USA, 6 December 2010 (2010-12-06), pages 757-762, XP031859319, ISBN: 978-1-4244-8863-6
- NORTEL: "LTE-A Downlink Multi-site MIMO Cooperation", 3GPP DRAFT; R1-083870(NORTEL-MULTISITE_MIMO_COOPERATIO N), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20080924, 24 September 2008 (2008-09-24), XP050317184, [retrieved on 2008-09-24]
- QIXING WANG ET AL: "Application of BBU+RRU Based Comp System to LTE-Advanced", COMMUNICATIONS WORKSHOPS, 2009. ICC WORKSHOPS 2009. IEEE INTERNATIONAL CONFERENCE ON, IEEE, PISCATAWAY, NJ, USA, 14 June 2009 (2009-06-14), pages 1-5, XP031515467, ISBN: 978-1-4244-3437-4

## Description

Embodiments of the invention concern a method for transmitting data between terminals of a wireless communication system, a computer program product, a node of a radio access network of a wireless communication system, and a wireless communication system. More specifically, embodiments of the invention concern an approach for a direct communication of terminals which are within an area covered by a single radio access network comprising a base station node and a plurality of remote radio heads providing a radio link to the respective terminals. Embodiments of the invention relate to the area of wireless communication systems that are based on optical networking.

Conventionally, when transmitting data between terminals within a common coverage area (e.g. a RAN - radio access network), the entire traffic, i.e., data and signaling traffic, goes all the way "up" from the source terminal to the core network and then back "down" to the destination terminal. More specifically, the problem with known wireless communication systems is that a local communication link between a pair of terminals or user equipments (UEs) that are co-located within the same coverage area unnecessarily involves many network entities such as the remote radio head (RRH), the base station (BS), the packet data network gateway (P-GW), the serving gateway (S-GW), and the mobility management entity (MME). These network entities are actually redundant because the data essentially does not need to go outside the radio access network (RAN). However, conventional approaches requiring the above-mentioned network entities for processing a communication between UEs co-located within the same coverage area of the RAN lead to a high processing load at the base station or signal processing node (BS/SPN) to which many remote radio heads are connected for serving a large area. Also, the link resources are wasted for the signaling among the plurality of network entities.

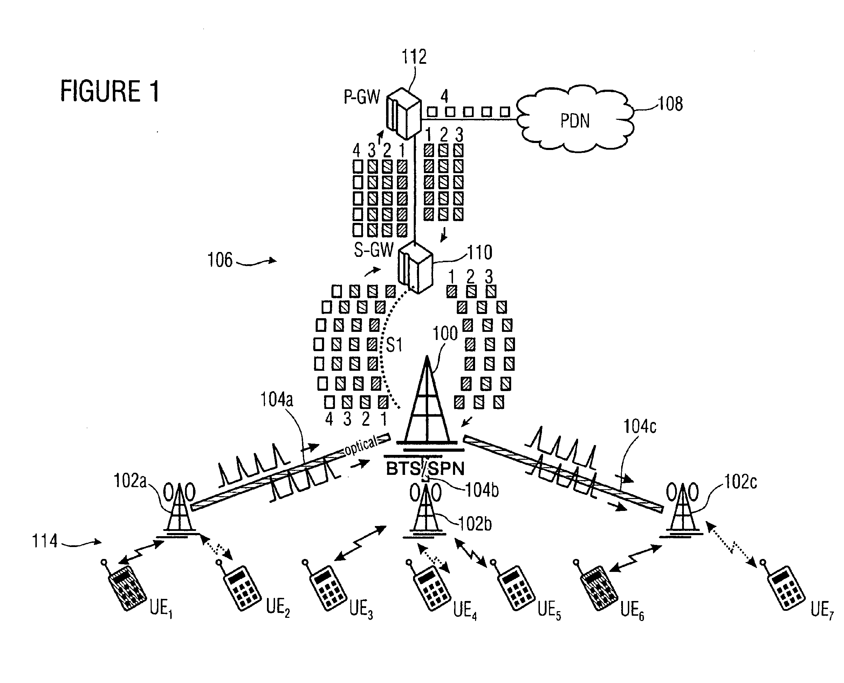

Fig. 1 shows a schematic representation of a wireless communication system depicting the limitations of state of the art solutions. Actually, so far remote radio heads have been deployed in commercial systems, however, the particular aspects of local UE-UE communications have not yet been considered. Fig. 1 shows a part of a wireless communications system comprising a base station 100 serving a coverage area via a plurality of remote radio heads 102a to 102c. Each of the remote radio heads 102ₐ to 102_{c} is connected to the base station 100 via a respective link 104a to 104c, for example an optical link. The common coverage area of the base station 100 that is depicted in Fig. 1 allows serving a plurality of user equipments UE₁ to UE₇. More specifically, the base station 100 serves the user equipments UE₁ and UE₂ via a remote radio head 102a. User equipments UE₃ to UE₅ are served by the base station 100 via a remote radio head 102b, and user equipments UE₆ and UE₇ are served by the base station 100 via the remote radio head 102c. The base station 100 is connected via a backbone or backhaul network 106 to a packet network, for example, the packet data network PDN 108. The backhaul network 106 connecting the base station 100 to the packet data network 108 comprises a serving gateway S-GW 110 and the packet data network gateway P-GW 112. The base station 100, the connections 104a-c and the remote radio heads 102a-c form the radio access network (RAN) 114.

For a communication between user equipments in different coverage areas, the data path extends from the user equipment through the base station 100 and the respective gateways 110 and 112 to the network 108 which is connected to further base stations having a similar structure as the one in Fig. 1 where the desired user equipment to which a communication is to be established is located. Also a communication from a mobile unit or user equipment to a fixed user equipment is done in the same way via the respective gateways and the network 108. For example, assume user equipment UE₅. User equipment UE₅ communicates with a remote device which is not part of the coverage area 114. The data path starts at user equipment UE₅ and extends via radio head 102b to base station 100. From base station 100 the signals are transmitted to the serving gateway 110 as is shown by the dotted data path "4". The data path "4" extends from the serving gateway 110 to the packet data network gateway 112 and from this gateway, the data path "4" extends to the network 108. In case of a communication between user equipments that are within the same coverage area 114, a communication is required between the user equipment, the base station and the respective gateways. For example, a communication between user equipment UE₁ and user equipment UE₆ is assumed. For establishing a communication between the two user equipments which are within the same coverage area 114, user equipment UE₁ signals via the remote radio head 102a, the optical link 104a and the base station 100, a desired communication to the respective gateways 110 and 112, as is schematically shown by the data path "1" extending from the base station 100 to the packet data network gateway 112. The packet data network gateway 112 communicates via the network 108 with the respective network entities for determining the location of the user equipment UE₆. The information is obtained that the user equipment UE₆ is served by base station 100 so that the respective path "1" extends from the packet data network gateway 112 via the serving gateway 110 to the base station 100 (see the data path on the right-hand side of the base station), and from the base station 100 the data/signals are transmitted via the optical link 104c and via the remote radio head 102c to the user equipment UE₆. The same approach is required when, for example, considering a communication between user equipments UE₂ and UE₄. In Fig. 1, the respective data path is path "2" extending all the way up to the gateway 112 and after having determined the location of user equipment UE₄ to be within the coverage area 114, all the way down from the gateway 112 to the base station 100 and via the optical link 104b and the remote radio head 102b to the user equipment UE₄. For a communication between the user equipments UE₃ and UE₇, the data path is data path "3" shown in Fig. 1.

As can be see, in situations where a communication between user equipments within the same coverage area 114 is desired, the conventional approach only provides a sub-optimal data path, as there is no direct connection between the user equipments. Actually, as mentioned above, the data path extends "all the way up" to the gateway 112 and "all the way down" to the base station 100 again. This leads to an unnecessary processing load at the base station 100. Considering wireless communication networks in which base stations will cover a large area, the ratio of UE-UE communications in the same area will significantly increase.

EP 2 264 960 A1 describes a method for joint processing of uplink data transmitted from at least one user equipment to a plurality of coordinated reception points of a wireless communication system. The method comprises estimating and preferably compensating for individual propagation delays of the uplink data transmitted from one of the user equipment to the coordinated reception points, and compensating a timing difference between a propagation delay of a coordinated reception point which serves the user equipment and at least one propagation delay of at least one coordinated reception point which does not serve the user equipment for performing the joint processing of the uplink data, wherein the step of compensating the timing difference comprises modifying a channel matrix associated with uplink channels from the at least one user equipment to the coordinated reception points.

Fabian Diehm, et. al: "The FUTON Prototype: Broadband Communication through Coordinated Multi-Point using a Novel integrated Optical/Wireless Architecture" Globecom Workshops (GC Workshps), 2010, IEEE, Piscataway, NJ, USA, December 6, 2010, pages 757-762 describes measurement results from the FUTON prototype system architecture which is based on the use of radio-over-fiber technology to create a distributed antenna system that is capable of supporting the high requirements of wireless networks for allowing coordinated multi point.

It is an object of the invention to provide an improved approach providing for improvements in the communication between user equipments in the same area.

This object is achieved by a method according to claim 1, a node according to claim 13 and a wireless communication system according to claim 14.

Embodiments of the invention provide a method for transmitting data between terminals of a wireless communication system, the wireless communication system comprising a core network and at least one radio access network coupled to the core network, wherein the method comprises transmitting data between at least two terminals of the wireless communication system co-located in a common coverage area of the at least one radio access network, and wherein the data is transmitted between the at least two terminals via the entities of the at least one radio access network without going outside the at least one radio access network.

Embodiments of the invention provide a node for a radio access network of a wireless communication system, wherein the node is configured to be coupled to a core network of the wireless communication system, and to a plurality of remote radio units, and wherein the node is configured to transmit data between terminals of the wireless communication system co-located in a common coverage area in accordance with the method of embodiments of the invention.

Embodiments of the invention provide a wireless communication system, comprising a core network, at least one node coupled to the core network, a plurality of remote radio units coupled to the node, and a plurality of terminals coupled to the remote radio unit, wherein the wireless communication system is configured to transmit data between the terminals co-located in a common coverage area in accordance with the method of embodiments of the invention.

In addition, embodiments of the invention provide for a computer program product comprising a computer program including instructions executing the method in accordance with embodiments of the invention when running the computer program on a computer.

In accordance with embodiments the entities of the at least one radio access network comprise a node coupled to the core network and a plurality of remote radio units, each remote radio unit coupled to the node, wherein the at least two terminals are coupled to the remote radio units, and wherein data is transmitted between the at least two terminals along a data path comprising the node and the remote radio units. In such an embodiment, the node may assign a common set of parameters for the data transmission and may signal them to the terminals, and the terminals may transmit/receive data on the basis of the parameters signaled by the node. In accordance with this embodiment, the method may further comprise determining a source terminal and a destination terminal in the common coverage area of the at least one radio access network, wherein transmitting data comprises forwarding data from the source terminal to the destination terminal, wherein the data path comprises an uplink between the source terminal and the node, and a downlink between the node and the destination terminal. The method may further comprise jointly allocating a resource and/or selecting a modulation and coding scheme for the data path on the basis of the uplink and downlink resources for the source and destination terminals.

Jointly allocating a resource and/or selecting a modulation and coding scheme may comprises allocating resources for the uplink and for the downlink, and/or selecting a common modulation and coding scheme for the uplink and for the downlink.

Allocating a resource may comprise remapping the resources associated with the uplink and downlink such that an effective channel between the source terminal and the destination terminal comprising an uplink channel between the source terminal and the node and a downlink channel between the node and the destination terminal fulfils a predefined criterion. The predefined criterion may be based the product of the channel coefficients describing the channel quality of the uplink channel and the downlink channel. Remapping may comprise remapping the uplink and downlink such that a maximum of the product is achieved.

In accordance with further embodiments, the method may comprise forwarding a reference signal from the source terminal to the destination terminal, and estimating at the destination terminal the effective channel.

Each of the terminals may have associated therewith a unique ID stored at the terminal and at an entity of the core network, and the method comprises determining the source terminal and the destination terminal in the common coverage area of radio access network on the basis of the unique IDs. In case the source terminal desires to set up a session with the destination terminal, the method may comprise forwarding the unique ID of the destination terminal to the entity of the core network, checking at the entity of the core network whether the destination terminal resides in the same coverage area of the radio access network in which the source terminal resides, and in case the source terminal and the destination terminal reside in a common coverage area, instructing the node by the entity of the core network to carry out the forwarding of the data.

The unique ID may comprise a unique identification number, an IP address, or a SIP address, and wherein the entity of the core network comprises a home subscriber server or a mobility management entity.

In accordance with embodiments of the invention, a "direct data path" using only the entities of the radio access network is proposed, i.e., a data path only including the source terminal, the remote radio unit to which the source terminal is coupled, the node (for example the base station), a further remote radio unit to which the destination terminal is coupled, and the destination terminal. Only a small amount of signaling information is sent to the core networks, for example, for determining whether a desired destination terminal is actually in the same area as the source terminal.

Thus, embodiments of the invention provide a new data forwarding method for intra-area terminal-to-terminal (UE-UE) communications and the necessary signaling mechanism for the wireless cellular network aiming at a reduction of complexity, energy use and link resource consumption. In accordance with embodiments of the invention, the data for a local UE-UE communication in the same coverage area is forwarded at the base station or signal processing node without going outside the radio access network (RAN). Aspects of the invention concern not only the network layer but also the L1/L2 layers. In the network layer, signaling aspects are targeted in order to efficiently exchange/collect the necessary information that is signaled to the target UEs so that the information can be exploited to achieve the desired reduction of complexity, energy use and link resource consumption. In accordance with embodiments, the signaling scheme is as follows: an entity like the home subscriber server (HSS) and the mobility management entity (MME) will hold an IP (internet protocol) address of the UE, a session initiation protocol (SIP) address and/or a new identification (ID) that uniquely identifies a UE. The UE, in accordance with this embodiment, will hold its own IP address, SIP identification or the above-mentioned new ID. When asking a network entity, like the MME to set up a session (data and/or voice) with another UE, the requesting UE will explicitly mention the IP address, the SIP ID or the UE ID to the mobility management entity. The mobility management entity will check its internal database. If it is found out that the IP address/SIP ID of the destination UE resides under the same base station, it will instruct the base station to carry out an internal forwarding of the data from the source UE to the destination UE. The MME may inform the base station about the IP addresses of the source UE and the destination UE so that the base station knows for which user equipment it has to carry out the internal forwarding.

In accordance with other embodiments, the UE may not have a pre-assigned IP address. In such a situation, the UE will update the responsible MME as soon as it receives an IP address from an IP assigning module, for example from the packet data network gateway provided in accordance with LTE/EPC. Under the assumption that the MME already knows the SIP ID of the UE (the MME is informed about this either during the attachment procedure or during a new session setup), it will store the IP address against any UE identifier (SIP ID, IMSI, etc). In such a way that, the MME will know the IP addresses of the source UE and the destination UE and it will inform the respective base station accordingly so that the base station can use the IP addresses (or any other ID) to determine which sessions should be forwarded internally, i.e., which sessions should provide for a data transfer between the user equipments only within the radio access network.

Embodiments of the invention further relate to the L1/L2 layers and how the signal processing efforts can be reduced. Embodiments of the invention teach a joined resource allocation as well as a modulation encoding scheme (MCS) selection taking into account the respective uplink and downlink resources for the source and destination UEs of a local UE-UE communication link. Embodiments of the invention allow for a reliable end-to-end communication from the source to the destination by jointly allocating resources for the uplink and for the downlink and also by selecting a common MCS. Embodiments of the invention thereby allow a reduction of the complexity by bypassing common procedures such as modulation encoding for the uplink and for the downlink. Also embodiments of the invention provide for a realization of a better spectral efficiency than the conventional resource allocation and MCS selection which are independently performed for the uplink and for the downlink.

Embodiments of the invention consider optical networking and focus on a communication link between a pair of user equipments (UEs) which are co-located in a certain common coverage area that is served by a base station or signal processing node (SPN) and a set of multiple remote radio heads (RRHs) that are connected to the BS/SPN via optical networks. Such a network configuration may be useful and can be typically found in urban areas with heavy traffic situations. It can be observed that most communications take place between UEs within the same area during a certain time period in many busy city areas. Embodiments of the invention overcome problems of conventional systems, such as 3GPP long-term evolution (LTE) and LTE advanced where UE-UE communication unnecessarily involves many network entities such as RRH, BS, serving gateway, packet data network gateway and mobility management entity that are redundant because the data essentially does not need to go outside the radio access network (RAN), at least from a conceptional point of view. Thus, embodiments of the invention minimize such conceptually unnecessary signaling/processing for a local UE-UE communication in the same coverage area. Thus, embodiments of the invention reduce the complexity as well as the link resource consumption, and consequently the required energy can be reduced.

Embodiments of the invention are especially provided for wireless cellular networks such as 3GPP LTE/LTE advanced and beyond or future commercial systems of next mobile networks (NMN) which comprise user equipments, remote radio heads, base stations, serving gateways, packet data network gateways, mobility management entities and the like.

Embodiments of the invention are advantageous as they efficiently support UE-UE communications within the same coverage area that is served by a base station/signal processing node and a set of multiple radio remote heads that are connected to the base station/signal processing node via optical networks. Embodiments of the invention provide means for minimizing the number of signaling and communications that is involved in order to realize such a local UE-UE communication in the same coverage area. This allows for a significant reduction of the complexity and the corresponding energy consumption, particularly at the base station in the L1/L2 processing as well as in the processing of all upper layer functionalities. The link resource consumption between the base station, the serve gateway and the packet data network gateway as well as the mobility management entity can be largely saved. Further, embodiments of the invention provide a new scheme in L1/L2 processing which provides a better spectral utilization leading to the possibility to support a higher number of customers at the same time using the same limited bandwidth in the network so that it contributes to the possibility to offer advanced serves and to improve customer satisfaction by future commercial systems.

Embodiments of the invention are now described with reference to the accompanying drawings, in which:
- Fig. 1: is a schematic representation of a wireless communication system depicting the limitations of state of the art solutions;
- Fig. 2(a): is a schematic representation of a portion of a wireless communication system similar to the one depicted in Fig. 1, on the basis of which an embodiment of the invention is described;
- Fig. 2(b): is a schematic representation explaining the basic differences between conventional relay systems and systems in accordance with embodiments of the invention;
- Fig. 3: is a schematic representation of the base station and a remote radio head connected with details of the signal processing elements of the L1/L2 layer of the base station;
- Fig. 4: shows diagrams representing the resource allocation/mapping in a base station of Fig. 3, wherein Fig. 4(a) shows an example of a radio access network, Fig. 4(b) shows the frequency bands used for an uplink connection from the mobile units to the base station, and Fig. 4(c) shows the downlink frequency bands used for a connection from the base station to the respective mobile units;
- Fig. 5: shows further details of the digital signal processor of the base station shown in Fig. 3, wherein Fig. 5(a) shows details of the downlink digital signal processor, and Fig. 5(b) shows details of the uplink digital signal processor;
- Fig. 6: shows an example of a reduction of the complexity when applying embodiments of the invention for a communication of user equipments which are within the same radio access network;
- Fig. 7: shows resource re-mapping at the base station in accordance with embodiments of the invention;
- Fig. 8: shows an example for resource re-mapping for a single user, wherein Fig. 8(a) shows the available channels for an uplink connection, Fig. 8(b) shows the available channels for the downlink connection, and Fig. 8(c) shows a table indicating the effective channels using the product of the channel coefficients representing the channel quality;
- Fig. 9: shows an example for resource re-mapping at the base station in accordance with an embodiment;
- Fig. 10(a)-(e): represent the signaling using a fixed IP in accordance with an embodiment; and
- Fig. 11(a)-(d): represent the signaling using a dynamic IP in accordance with an embodiment.

In the subsequent description of embodiments of the invention, the same or similar elements are indicated by the same reference signs.

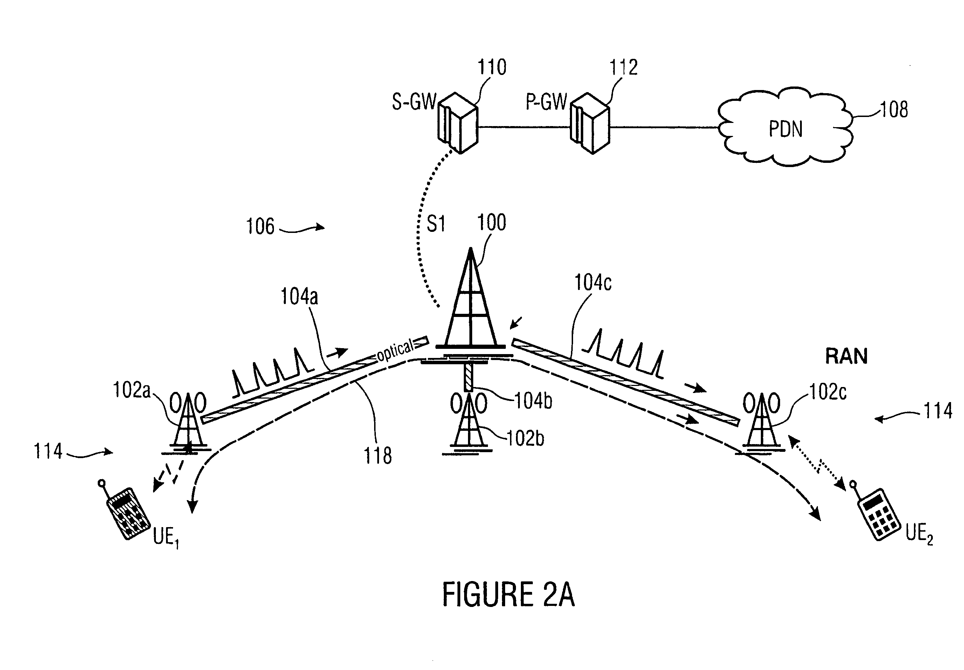

Fig. 2(a) is a schematic representation of a portion of a wireless communication system similar to the one depicted in Fig. 1. On the basis of Fig. 2(a), the differences of embodiments of the invention when compared to conventional approaches will be discussed. Fig. 2(a) depicts the radio access network RAN 114 which comprises the base station 100, the remote radio heads 102a to 102c and the optical connection 104a to 104c between the radio heads 102a to 102c and the base station 100. Further, elements of the backhaul network 106, e.g. the serve gateway 110 and the packet data network gateway 112 are shown. In Fig. 2(a), a communication between user equipment UE₁ served by remote radio head 102a and the user equipment UE₂ served by remote radio head 102c is assumed. In accordance with the invention, the base terminal station or signal processing node 100 acts as an anchor point for the communication between the user equipments UE₁ and UE₂. As is schematically depicted by the dotted line forwarding data between the user equipment UE₁ and UE₂ is along a direct data path 118 that extends from the user equipment UE₁ via the remote radio head 102a and the optical link 104a to the base station 100 and from the base station 100 via the optical link 104c and the remote radio head 102c to the user equipment UE₂. Thus, in accordance with embodiments of the invention, data passing along the direct data path 118 is provided such that the data stream does not go outside the radio access network 114, e.g. forwarding of the data occurs at the base station 100 at the L1 layer. Thus, since it is not necessary for the data to leave the radio access network 114 link resource consumption and processing complexity/energy can be saved in accordance with embodiments of the invention.

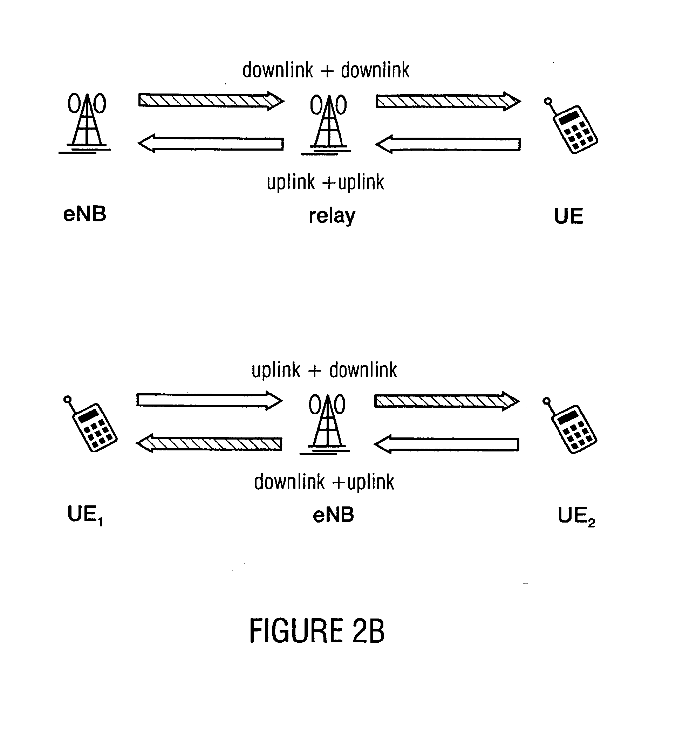

Fig. 2(b) is a schematic representation explaining the basic differences between conventional relay systems and systems in accordance with embodiments of the invention. In the upper diagram in Fig. 2(b) a conventional relay system is shown establishing a connection (up- and downlink) between a base station eNB and a user equipment UE via the relay station. As can be seen, there is a downlink channel between the base station eNB and the relay station, and a downlink channel between the relay station and the user equipment UE. Further, there is an uplink channel between the user equipment UE and the relay station, and an uplink channel between the relay station and the base station eNB. Contrary thereto, in accordance with embodiments of the invention, the base station eNB (which may be considered some kind of relay station in a broad sense for the direct communication between two UEs) provides a direct data path between two user equipments UE1 and UE2. However, the base station is operative to connect the respective up- and downlink channels between the UEs and the base station eNB. This is shown in the lower part of Fig. 2(b). There is an uplink channel between the first user equipment UE1 and the base station eNB, and a downlink channel between the base station eNB and the second user equipment UE2. Further, there is an uplink channel between the second user equipment UE2 and the base station eNB, and a downlink channel between the base station eNB and the first user equipment UE 1.

When compared to conventional approaches as described, for example with regard to Fig. 1, the data path 118 is basically limited to the physical or L1 layer. Through this invention, packet processing at BTS/SPN node, S-GW and P-GW could be eliminated which not only reduces control and data bandwidth consumption along the route till P-GW, but also reduces processing load and energy consumption at BTS/SPN node.

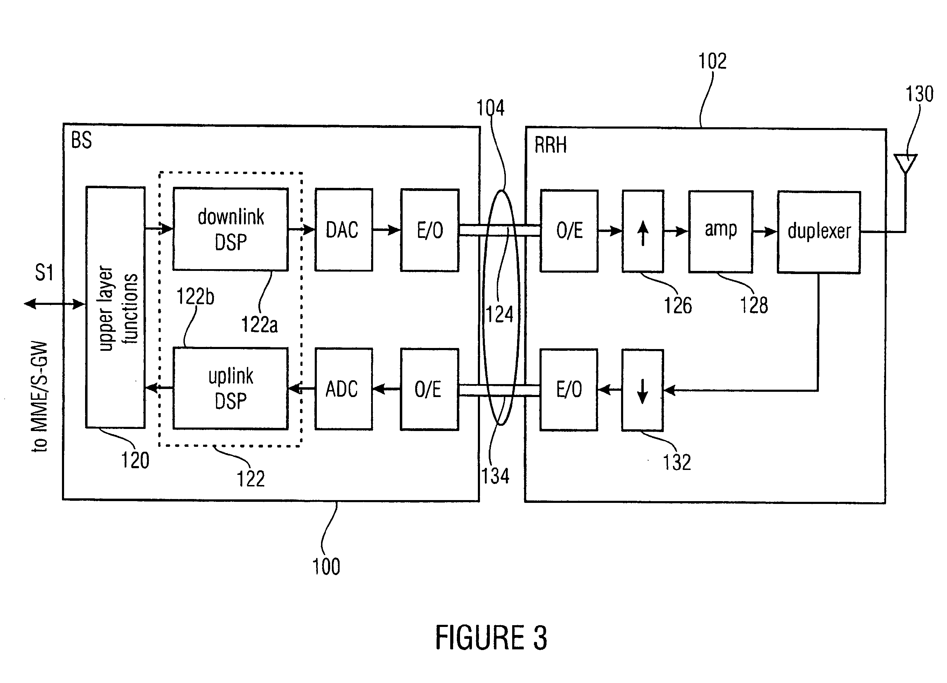

In the following, further details of embodiments of the invention regarding the processing at the L1/L2 layers in the system as shown in Fig. 2(a) are discussed. Fig. 3 shows a schematic representation of the base station 100 and one remote radio head 102 connected via the optical network 104. Fig. 3 depicts in detail the elements of the L1/L2 layer of the base station 100, and the upper layer functionalities are schematically represented by block 120. The L1/L2 layer comprises a digital signal processor 122 which, in turn, comprises a downlink digital signal processor 122a and an uplink digital signal processor 122b. The downlink digital signal processor 122a processes signals received via the interface S 1 from the elements of the backhaul network and outputs the processed signals to a digital-analog-converter DAC that, in turn, provides the analog signal to an electro/optical transducer E/O for providing optical signals for transmission via a first branch 124 of the optical connection 104. The remote radio head 102 comprises an optical/electrical transducer O/E coupled to the first branch 124 of the optical connection 104. The electrical signal is up converted by converter 126, amplified by amplifier 128 and forwarded to a duplexer for output via the antenna 130 of the remote radio head 102, thereby establishing a wireless communication or a radio channel with a user equipment. Signals received via antenna 130 are processed by the duplexer and forwarded to a down converter 132. The output signals of the down converter 132 are input into the electrical/optical transducer E/O for providing optical signals to be transmitted via the second branch 134 of the optical connection 104 to the base station 100. The signal is received at an optical/electrical transducer O/E and the electrical signal is forwarded to an analog-digital-converter ADC which outputs the digital signal into the digital uplink signal processor 122b.

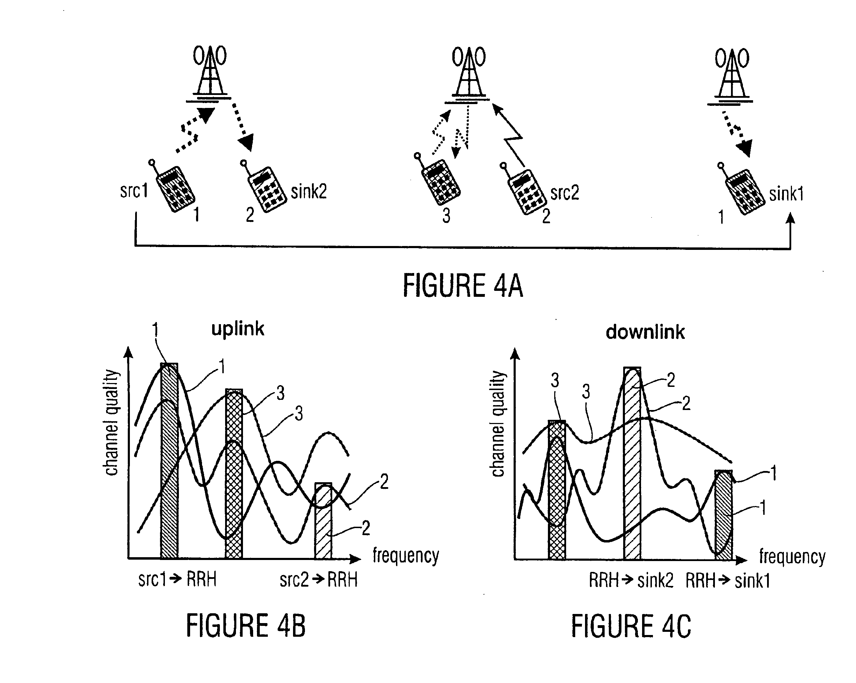

Fig. 4 shows diagrams representing the resource allocation/mapping in a base station as is, for example, depicted in Fig. 3. In Fig. 4(a), an example of a radio access network is shown including the remote radio heads 102a to 102c of which radio head 102a serves two user equipments, radio head 102b also serves two user equipments and radio head 102c serves one user equipment. Fig. 4(b) shows the frequency bands used for an uplink connection from the mobile units to the base station and Fig. 4(c) shows the downlink frequency bands used for a connection from the base station to the respective mobile units. As can be seen, for the downlink and for the uplink, different frequency bands may be assigned and the wide band signals result in frequency selective channels. This requires the assignment of a proper modulation and coding scheme (MCS). In the example depicted in Fig. 4, it is assumed that a connection within the radio access network is to be established between the user equipment src1 served by the remote radio head 102a and the user equipment sink1 served by the remote radio head 102c. Fig. 4(b) shows the frequency band and the wide band signal that is used for the uplink connection from the user equipment src1 to the base station (the frequency band and signal are referenced by the number "1"). Fig. 4(c) shows the frequency band and signal used for the downlink connection from the base station to the user equipment sink1 (the frequency band and the signal are referenced by the number "1"). As can be seen, different frequency bands may be used for the uplink and for the downlink. The frequency bands depicted in Fig. 4(b) and Fig. 4(c) that are labeled with "2" refer to the uplink and downlink connection for a UE-UE communication from the user equipment src2 served by the second remote radio head 102b to the user equipment sink2 served by the first radio head 102a. The frequency bands and signals labeled "3" in Fig. 4(b) and in Fig. 4(c) refer to the communication of a user equipment served by the radio head 102b with another device that is not part of the radio access network shown in Fig. 4.

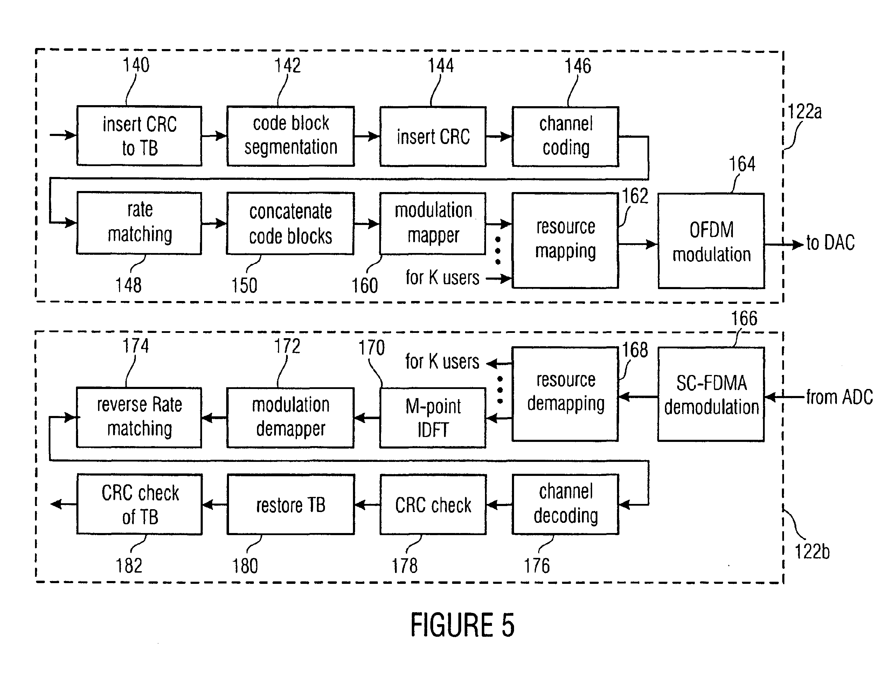

Fig. 5 shows further details of the digital signal processor of the base station shown in Fig. 3. Fig. 5(a) shows details of the downlink digital signal processor 122a, and Fig. 5(b) shows details of the uplink digital signal processor 122b. The downlink digital signal processor 122a receives a signal that is processed by the blocks 140 to 160 in a conventional way. Processing steps 140 to 160 are provided for all K users and the processed signals are input into a resource mapping block 162 which outputs a signal for the OFDM modulation block 164. The output signal of block 164 is forwarded to the DAC shown in Fig. 3. The uplink digital signal processor at the base station receives from the DAC shown in Fig. 3 a signal that is demodulated by a single carrier frequency division multiplexing in block 166, and the output signal of block 166 is forwarded to the resource de-mapping block 168 that generates de-mapped signals for all K users. For each user, the signal from the resource de-mapping block 168 is processed by blocks 170 to 182 for providing the output of the digital signal processor. Thus, in conventional systems for providing a communication with a mobile unit all blocks need to be used both in the downlink and in the uplink digital signal processors, irrespective as to whether a communication is with a remote unit which is not served by the same radio access network or not. This means that also for a communication between two user equipments in the same radio access network all signal processing entities shown in Fig. 5 are used.

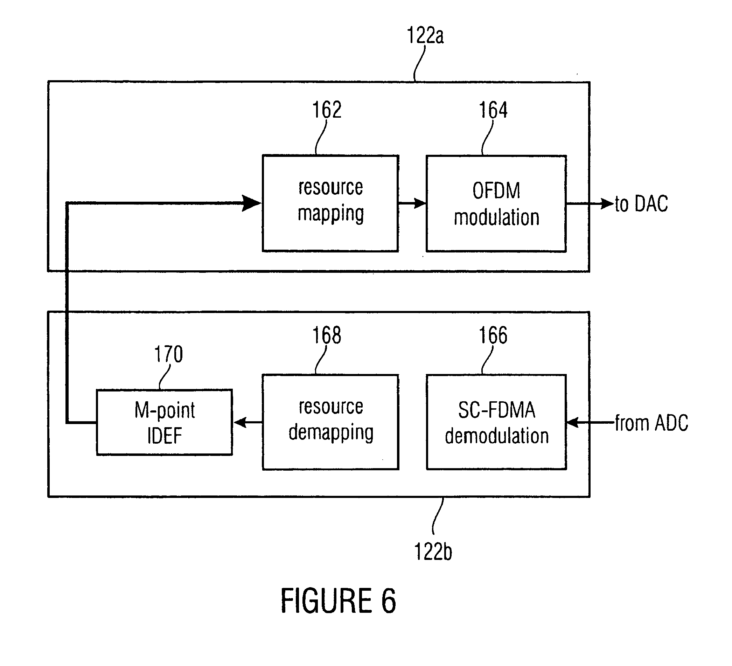

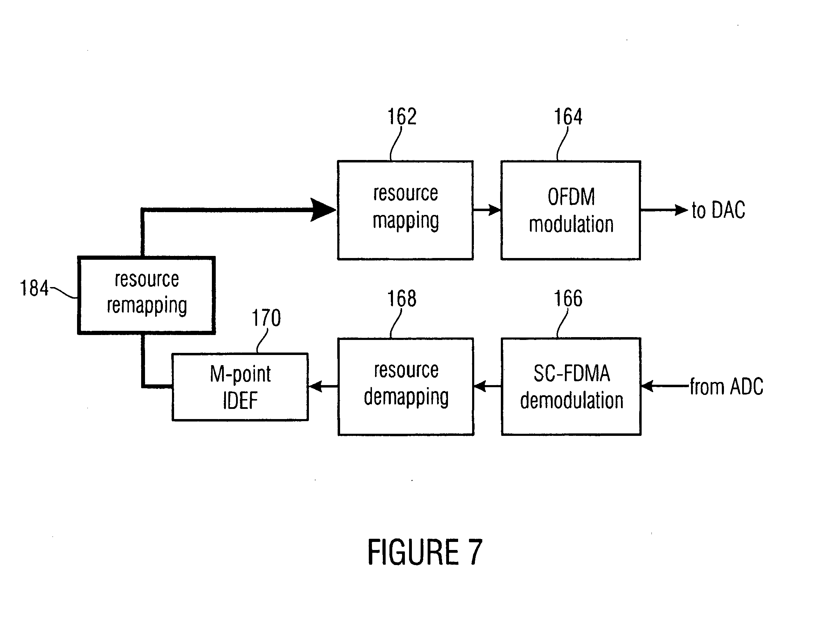

In accordance with embodiments of the invention data between the at least two terminals is transmitted without going outside the radio access network thereby allowing bypassing most of the processing in the L1/L2 layer and also in all upper layers. In accordance with embodiments, for establishing the direct data path (see path 118 in Fig. 2(a)) the base station directly links the uplink of the requesting UE and the downlink for the requested UE (see Fig. 2(b)), e.g. on the basis of control information signaled from a higher level network entity (e.g. the MME). Fig. 6 shows an example of a reduction of the complexity when applying the approach in accordance with embodiments of the invention for a communication of user equipments which are within the same radio access network. Signals received in such a communication are processed by the uplink digital signal processor 122b at the base station, however, only blocks 166 to 170 are required and the signal output from the block 170 is directly input into the resource mapping block 162 of the downlink digital processor 122a so that the reduction in complexity/energy requirements and link resources in the L1/L2 layer and, consequently, in all upper layers for a communication between user equipments in the same radio access network is evident from a comparison of Figs. 6 and 7. It is noted, that Fig. 6 shows the resources used for the direct communication between the user equipments in the same radio access network, however, all other resources as shown in Fig. 5 are also present as the base station needs to be in the position to allow communication with remote devices not being in the radio access network associated with the base station.

In accordance with embodiments, a resource re-mapping at the base station is possible. If this is desired, an additional block is provided between the uplink and downlink digital signal processing blocks of the base station in a way as depicted in Fig. 7. Fig. 7 corresponds substantially to Fig. 6 and shows those blocks of the digital signal processor and the base station required for the communication between user equipment in the same radio access network in accordance with embodiments of the invention. In addition to Fig. 7, a resource re-mapping block 184 is provided between blocks 170 and 162 so that the effective channel may be considered for the MCS selection at the transmitting user equipment. The effective channel between the two user equipments is a concatenation of the uplink and downlink channels, more specifically it is represented by the product of the channel coefficients. The effective channels can be optimized by re-mapping at the base station and in a multi-user case an advanced schedule is provided which will find the best pair of uplink and downlink channels for achieving a predefined parameter, for example a maximum sum rate.

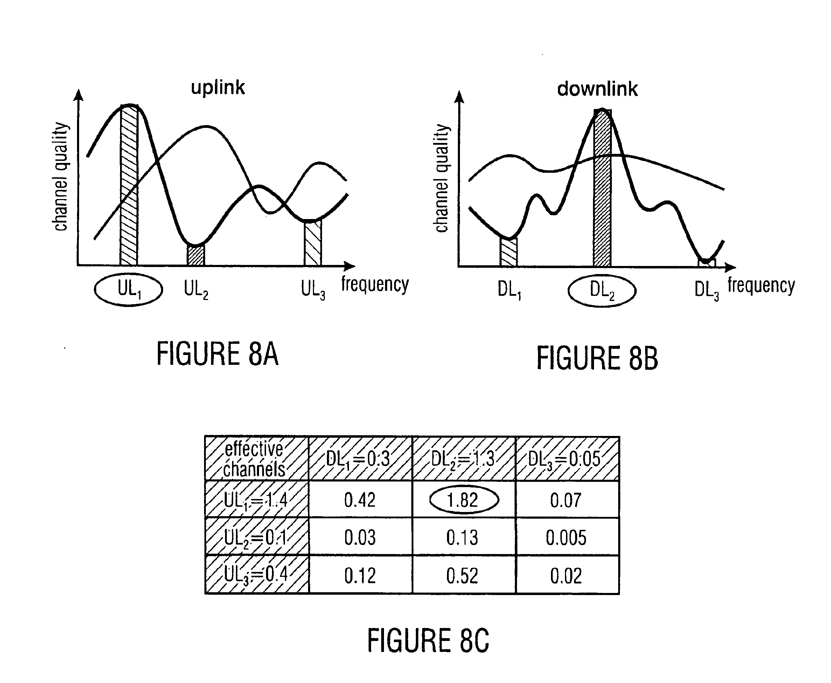

Fig. 8 shows an example for resource re-mapping for a single user. Fig. 8(a) shows the available channels for an uplink connection, Fig. 8(b) shows the available channels for the downlink connection, and Fig. 8(c) shows a table indicating the effective channels, more specifically the product of the channel coefficients representing the channel quality. In Fig. 8(a) and in Fig. 8(b), three uplink and downlink channels UL₁ to UL₃ and DL₁ to DL₃ are assumed having the channel coefficients shown in the table in Fig. 8(c). At the base station the resources are mapped in such a way that the product of the channel coefficients for the uplink and downlink channels is at a maximum value. In the example of Fig. 8, the uplink channel UL₁ is selected and remapped to the downlink channel DL₂ at a different frequency band as the channel coefficient for these two channels yields the largest or maximum value of the product of the channel coefficients.

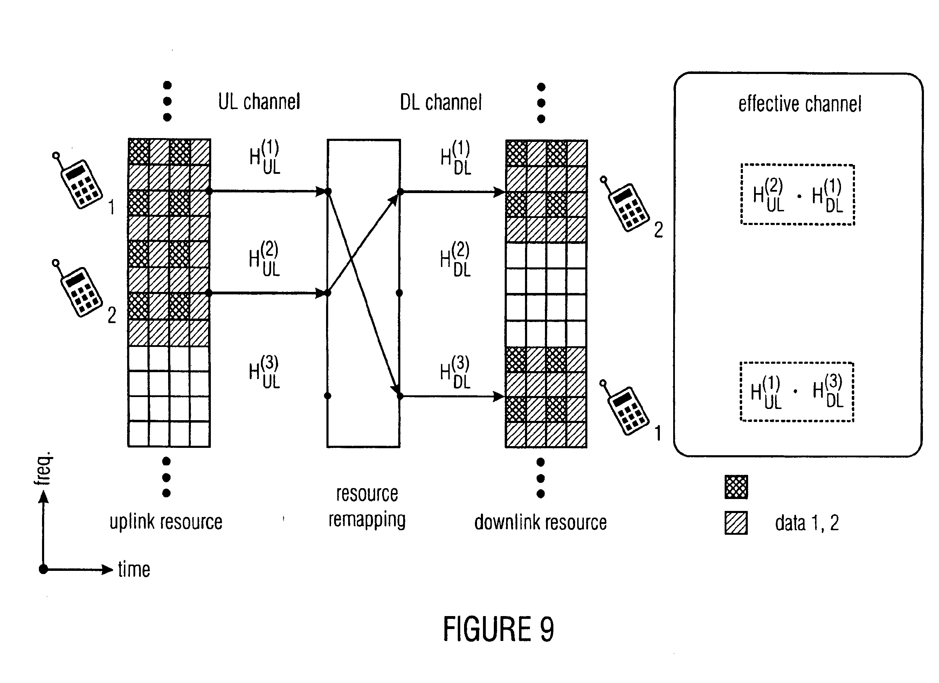

Fig. 9 shows an example for the resource re-mapping at the base station. In accordance with this embodiment, a reference signal is forwarded from the uplink to the downlink, and the receiving or end user equipment observes the "effective channel" according to the resource re-mapping, and the base station or eNB performs the necessary processing to convert the uplink reference signal to the downlink reference signal, if necessary, for example due to different reference signal structures. Fig. 9 shows on the left-hand side the respective uplink resources for two user equipments which desire to communicate with associated user equipments in the same radio area network. The associated user equipments use respective downlink resources. The user equipments which are to communicate with each other are denoted by the same numbers, namely either number "1" or number "2". The uplink channel for user equipment UE1 is remapped to the downlink channel 3 so that the effective channel is calculated on the basis of the equation shown at the lower right-hand side of Fig. 9. The uplink channel of the second user equipment is remapped to the first downlink channel so that the effective channel is calculated as shown in the upper right-hand side of Fig. 9.

In the following, network aspects regarding the signaling will be described in further detail. More specifically, embodiments will be described regarding the determination as to whether a source user equipment and a destination user equipment are in the same area and how the relevant nodes in the network provide the signaling for allowing forwarding of data in accordance with embodiments of the invention. The problem in conventional networks is that no solution for such situations exists at present.

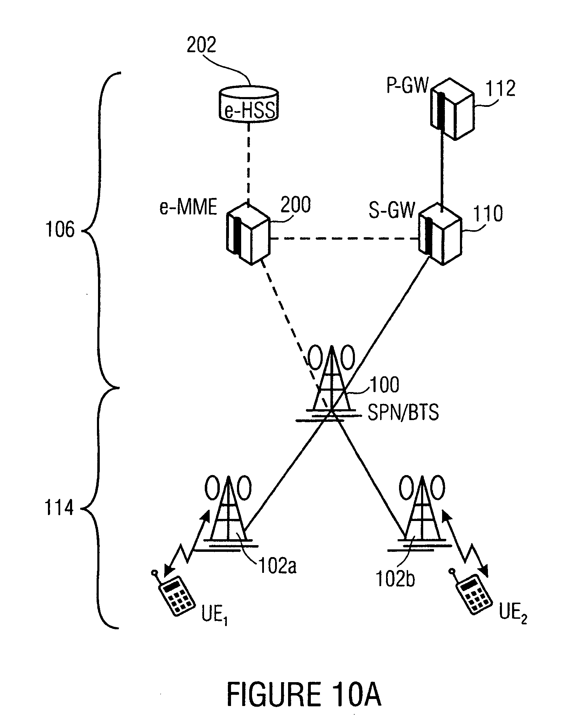

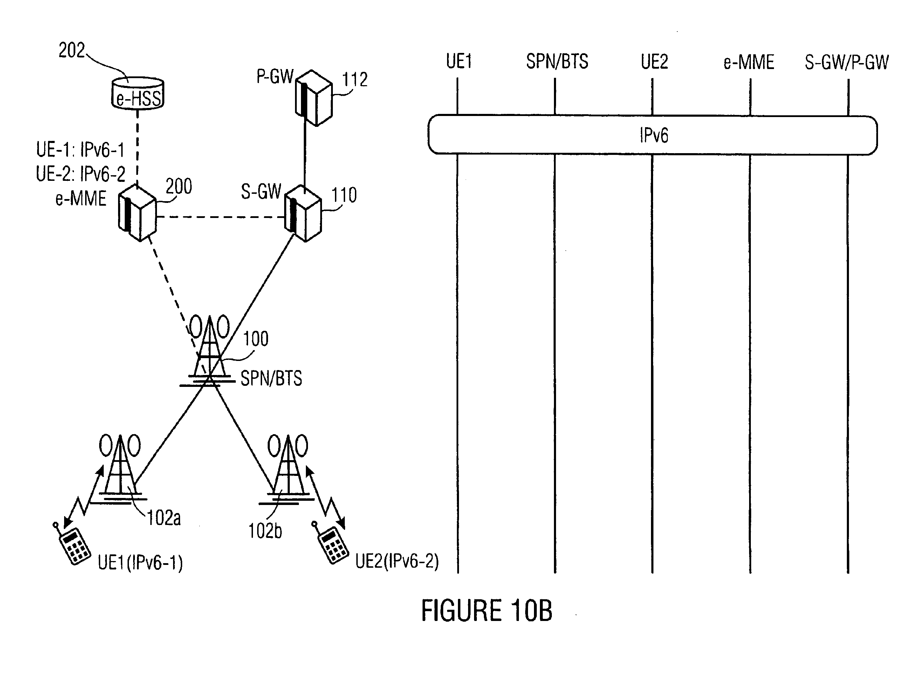

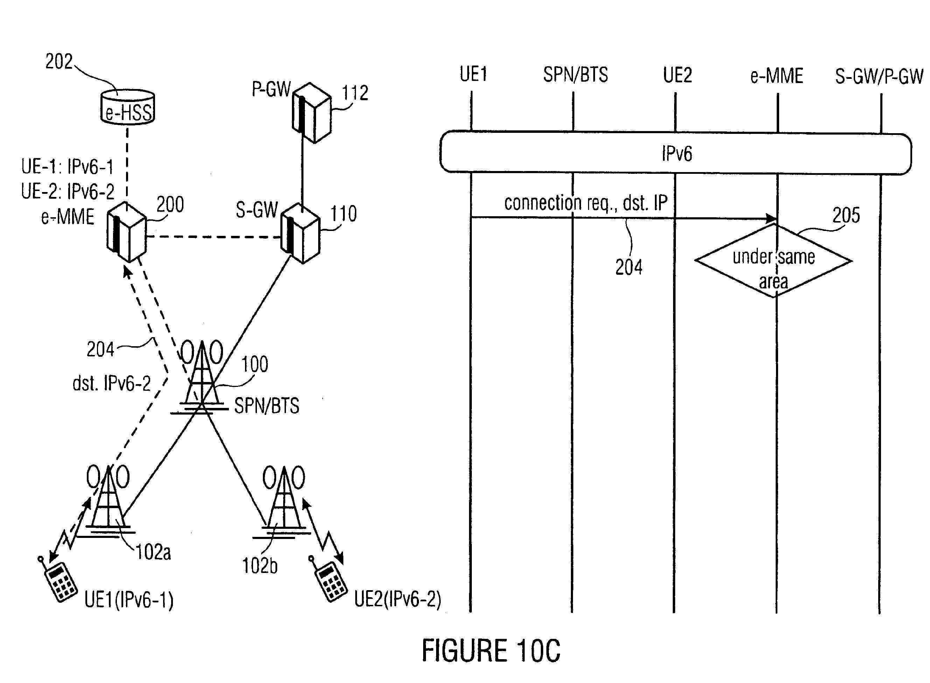

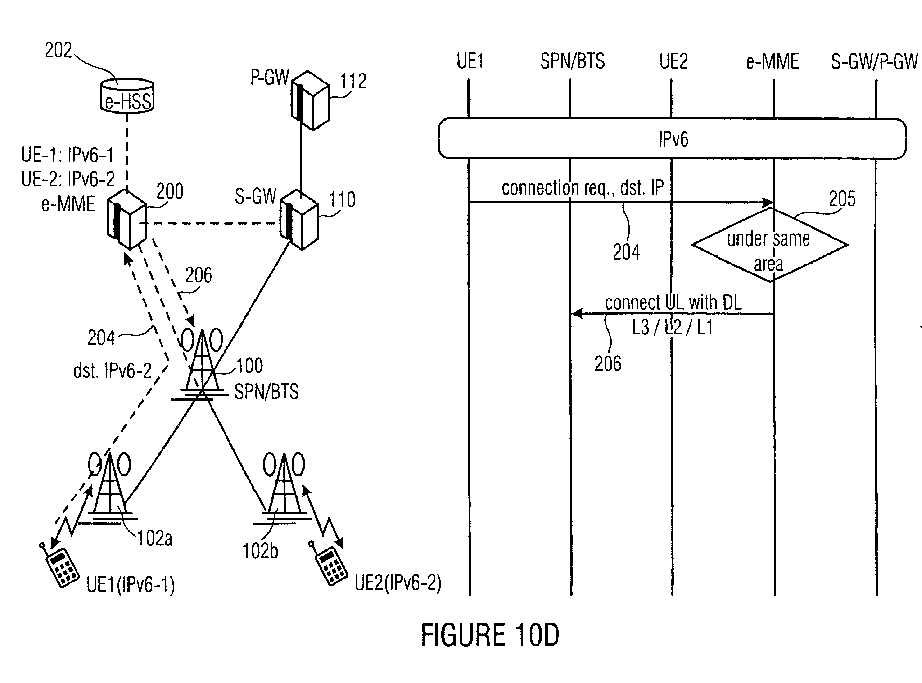

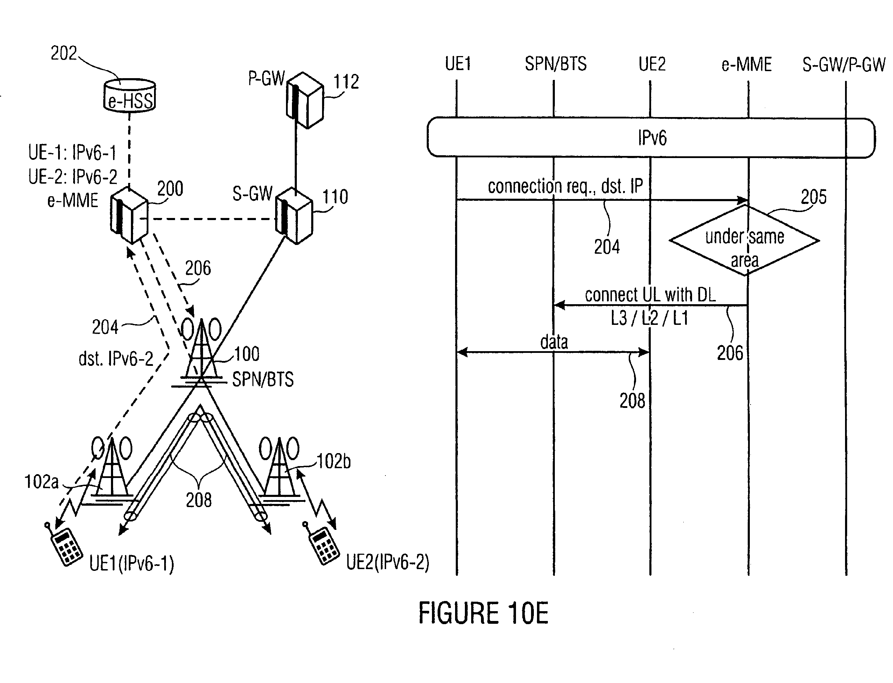

With regard to Fig. 10, an example for the signaling using a fixed IP will be described. Fig. 10(a) depicts an example of a wireless communication system similar to the one shown in Figs. 1 and 2(a), however, a radio access network comprising the base station 102 and two remote radio heads 102a and 102b serving two user equipments UE1 and UE2 is shown for simplicity. It is assumed that a communication between user equipment UE1 and user equipment UE2 is desired. In Fig. 10(a) in addition the e-MME 200 (extension of present MME in LTE/EPC architecture) and the e-HSS202 (extension of HSS in present cellular network architecture) are shown. The mobility management entity 200 holds the IP of each of the user equipments UE1 and UE2. As is shown in Fig. 10(b) user equipment UE1 has associated therewith the address IPv6-1 and user equipment UE2 has associated therewith address IPv6-2. In the right-hand portion of Fig. 10(b), the signaling between the respective units depicted in Fig. 10 will be explained. In Fig. 10(b) it is indicated that the respective addresses of the user equipments UE1 and UE2 are known in the system. More specifically, the addresses IPv6-1 and IPv6-2 are available in the mobility management entity 200. As is depicted in Fig. 10(c), for setting up a connection between the user equipments UE1 and UE2 that are within the same radio access network, user equipment UE1 forwards a connection request 204 including the destination address, namely the address of user equipment UE2 (IPv6-2) via the remote radio head 102a and the base station 100 to the mobility management entity 200. At the mobility management entity 200 it is determined 205 as to whether the requested or destination IP is "under the same area" which can be determined by a query to the database of the mobility management entity. Since the destination IP is present it can be determined that the user equipment UE2 is under the same area as the user equipment UE1 so that a direct communication applying the principles in accordance with embodiments of the invention may be used. As is shown in Fig. 10(d), following the determination that the user equipment UE2 is under the same area as to the user equipment UE1, the management entity 200 signals 206 to the base station to connect the uplink with the downlink using the L1/L2/L3 layers. Once the uplink and the downlink are connected at the base station 100, data may be exchanged 208 between the user equipment UE1 and the user equipment UE2 via the base station 100 without the need for passing network components or entities outside the radio access network (see Fig. 10(e)).

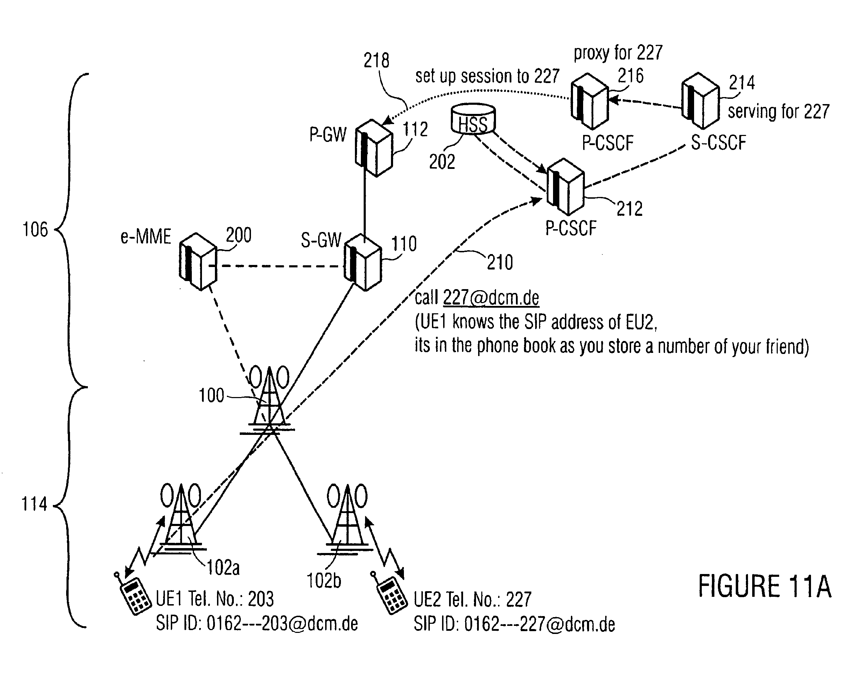

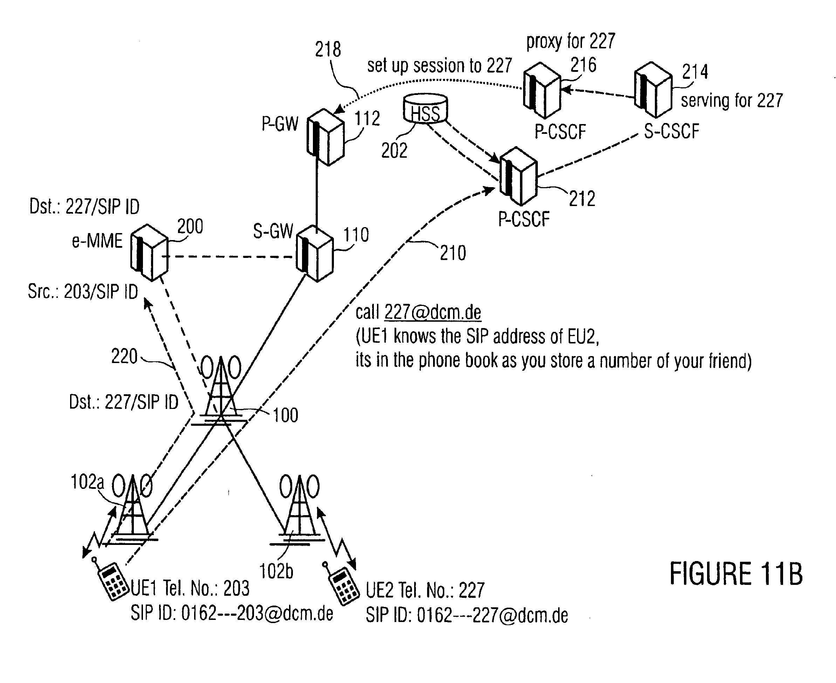

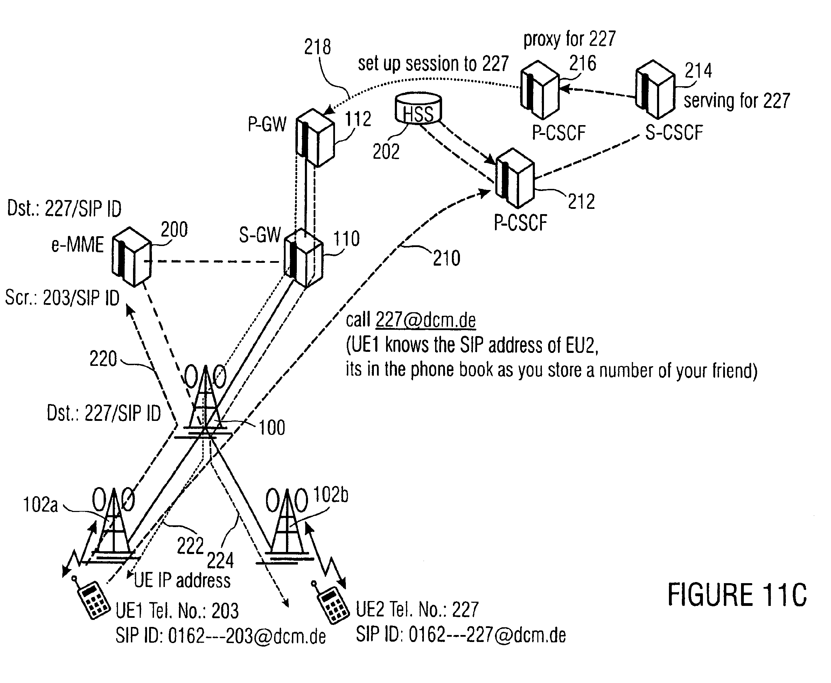

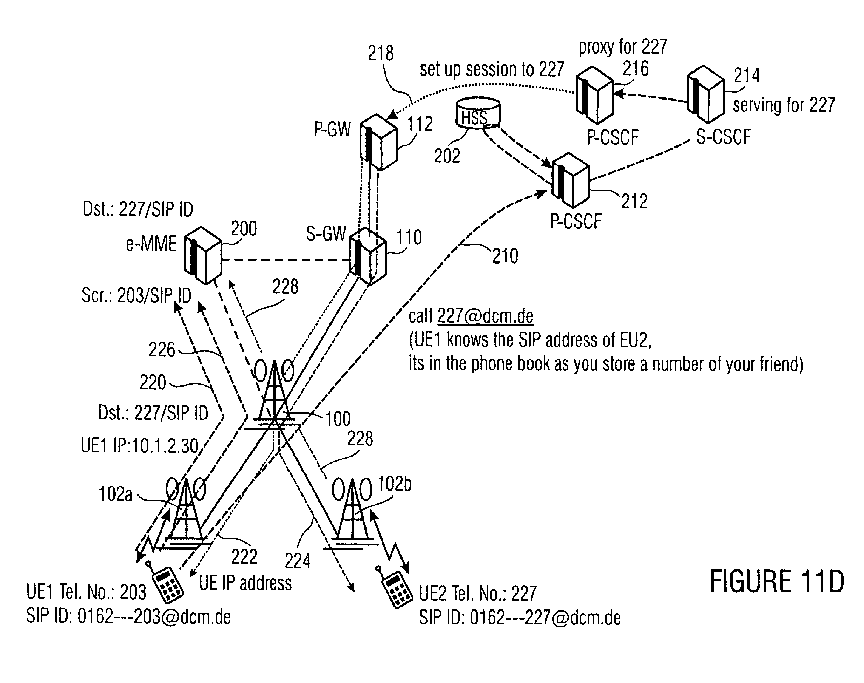

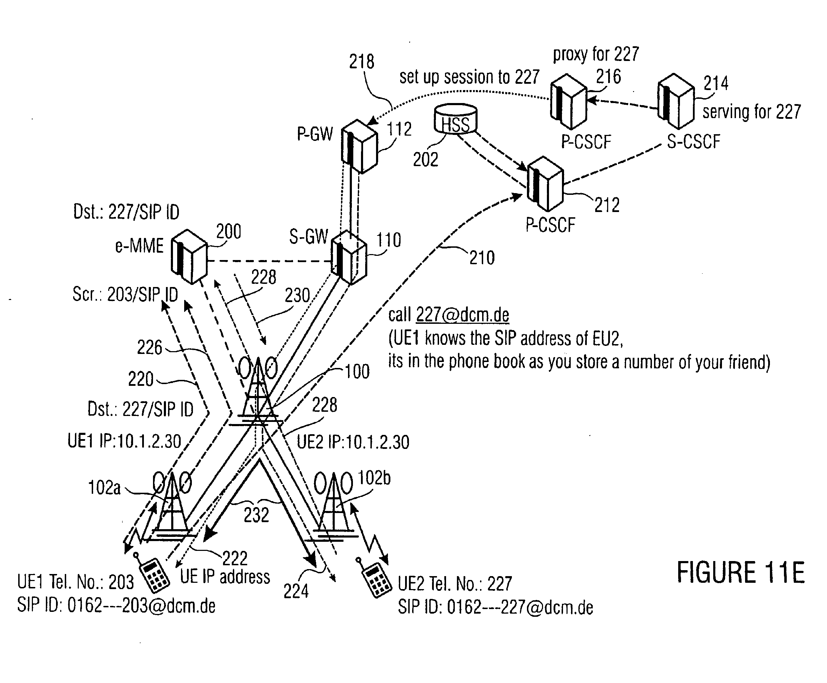

With regard to Fig. 11, embodiments are described using a dynamic IP and how signaling is achieved in such a situation. Again, a wireless communication system as in Fig. 10(a) is shown. In the embodiments of Fig. 11, the user equipments have respective telephone numbers, for example user equipment UE1 has the telephone number 203 and the user equipment has the telephone number 227. Further, each of the user equipments has a SIP ID (session IP identification). User equipment UE1 has associated SIP ID 0162-203@dcm.de and user equipment UE2 has associated SIP ID 0162---227*@*dcm.de. The user equipments know one or more SIP addresses of other user equipments, for example user equipment UE1 knows the SIP address of user equipment UE2, for example it is in the phone book of the user equipment UE1 just as a number of any other personal friends stored there. For initiating a communication between the user equipments UE1 and UE2 that are within the same radio access network 114, user equipment UE1 issues a call 210 to the proxy-CSCF entity 212 (CSCF = call session control function). The call 210 indicates the SIP address of user equipment UE2, namely a SIP address 227*@*dcm.de. Via the serving CSCF 214 for the SIP address 227 and via the proxy-CSCF 216 for the address 227, a session is set up to address 227 as indicated by the communication 218 between the proxy 216 for 227 and the gateway 112. As is shown in Fig. 11(b), the user equipment UE1 issues a call 220 indicating the destination 227, namely the telephone number of user equipment UE2 together with its SIP ID to the mobility management entity 200. The mobility management entity 200 holds the source information, namely the telephone number of UE1 which is 203 and the associated SIP ID and also the destination information, namely the telephone number 227 and the SIP ID associated with user equipment UE2. The mobility management entity 200 contacts the gateway 112 which provides to the two user equipments UE1 and UE2 via signaling messages 222 and 224 generated UE IP addresses associated with UE1 and UE2 (see Fig. 11(c)). As is shown in Fig. 11 (d), the UE IP addresses are signaled from the respective user equipments UE1 and UE2 via respective messages 226 and 228 to the mobility management unit 200. The MME 200, see Fig. 11(e), signals via message 230 to the base station 100 to connect the uplink and down link for the data exchange between the user equipments UE1 and UE2 as is indicated by 232, thereby establishing the direct data path between the UEs via the base station 100. Thus, Fig. 11 allows a direct communication between user equipments in the same radio access network using IP addresses that are dynamically generated on the basis of the SIP address associated with each of the user equipments.

Embodiments of the invention as described above provide for a packet processing load reduction at hugely loaded base stations and allow for a shortest path routing that saves unnecessarily link resource consumption in the network. Also, less state maintenance at other nodes, for example the serve gateway or the packet data network gateway is required. Further, while conventional approaches show an increased round trip delay per acknowledgement request the approach in accordance with embodiments reduces the overall delay for exchanging the end-to-end acknowledgement messages.

Further, in accordance with embodiments of the invention both resource re-mapping and adaptation of the MCS at the base station is possible wherein the resource re-mapping and the MCS selection can be done separately for the two channels, the uplink channel and the downlink channel due to the full recovery of a message. In case the base station decoded the information successfully, the impact of the uplink channel can be ignored, thereby allowing for a more flexible approach.

SPN/BTS node is responsible for disseminating src. UE and dst. UE L2, when necessary L2.5 or L3 addresses to each other so that src. UE can establish data session with dst. UE. This function can also be performed by core network e.g. e-MME.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed. Generally, embodiments of the invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

Yet a further embodiment comprises a processing means, for example a computer, or a programmable logic device, configured to or adapted to perform one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

A further embodiment comprises a computer having installed thereon the computer program for performing one of the methods described herein.

The above described embodiments are merely illustrative for the principles of the invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A method for transmitting data from a first terminal (UE1) of a wireless communication system to a second terminal (UE2) of the wireless communication system, the wireless communication system comprising a core network (106, 108) and at least one radio access network (114) coupled to the core network (106, 108), the method comprising:
transmitting data from a first terminal (UE1) of the wireless communication system to a second terminal (UE2) of the wireless communication system, the first and second terminals (UE1, UE2) being co-located in a common coverage area of the at least one radio access network (114),
wherein the data is transmitted from the first terminal (UE1) to the second terminal (UE2) via the entities (100, 102a-c, 104a-c) of the at least one radio access network (114) without going outside the at least one radio access network (114), and
wherein transmitting the data comprises connecting, at a node (100) of the radio access network (114), the uplink channel between the first terminal (UE1) and the node (100) and the downlink channel between the node (100) and the second terminal (UE2).

2. The method of claim 1,
wherein the entities (100, 102a-c, 104a-c) of the at least one radio access network (114) comprises the node (100) coupled to the core network (106, 108) and a plurality of remote radio units (102a-c), each remote radio unit (102a-c) coupled to the node (100),
wherein the at least two terminals (UE1, UE2) are coupled to the remote radio units (102a-c), and
wherein data is transmitted from the first terminal (UE1) to the second terminal (UE2) along a data path (118) comprising the node (100) and the remote radio units (102a-c).

3. The method of claim 1 or 2,
wherein the node (100) assigns a common set of parameters for the data transmission and signals them to the terminals (UE1, UE2), and
wherein the terminals (UE1, UE2) transmit/receive data on the basis of the parameters signaled by the node (100).

4. The method of claim 2 or 3, comprising:
determining a source terminal (UE1) and a destination terminal (UE2) in the common coverage area of the at least one radio access network (114);
wherein transmitting data comprises forwarding data from the source terminal (UE1) to the destination terminal (UE2), wherein the data path (118) comprises an uplink between the source terminal (UE1) and the node (100), and a downlink between the node (100) and the destination terminal (UE2); and
jointly allocating a resource and/or selecting a modulation and coding scheme for the data path (118) on the basis of the uplink and downlink resources for the source and destination terminals (UE1, UE2).

5. The method of claim 4, wherein jointly allocating a resource and/or selecting a modulation and coding scheme comprises allocating resources for the uplink and for the downlink, and/or selecting a common modulation and coding scheme for the uplink and for the downlink.

6. The method of claim 4 or 5, wherein allocating a resource comprises:
remapping the resources associated with the uplink and downlink such that an effective channel between the source terminal (UE1) and the destination terminal (UE2) comprising an uplink channel between the source terminal (UE1) and the node (100) and a downlink channel between the node (100) and the destination terminal (UE2) fulfils a predefined criterion.

7. The method of claim 6, wherein the predefined criterion is based the product of the channel coefficients describing the channel quality of the uplink channel and the downlink channel.

8. The method of claim 7, wherein remapping comprises remapping the uplink and downlink such that a maximum of the product is achieved.

9. The method of one of claims 6 to 8, comprising
forwarding a reference signal from the source terminal (UE1) to the destination terminal (UE2), and
estimating at the destination terminal (UE2) the effective channel.

10. The method of one of claims 1 to 9, wherein each of the terminals (UE1, UE2) has associated therewith a unique ID stored at the terminal (UE1, UE2) and at an entity (200) of the core network (106, 108), the method comprising:
determining the source terminal (UE1) and the destination terminal (UE2) in the common coverage area of radio access network (114) on the basis of the unique IDs.

11. The method of claim 10, comprising:
in case the source terminal (UE1) desires to set up a session with the destination terminal (UE2), forwarding the unique ID of the destination terminal (UE2) to the entity (200) of the core network (106, 108);
checking at the entity (200) of the core network (106, 108) whether the destination terminal (UE2) resides in the same coverage area of the radio access network (114) in which the source terminal (UE1) resides; and
in case the source terminal (UE1) and the destination terminal (UE2) reside in a common coverage area, instructing the node (100) by the entity (200) of the core network (106, 108) to carry out the forwarding of the data.

12. The method of claim 10 or 11, wherein the unique ID comprises a unique identification number, an IP address, or a SIP address, and wherein the entity of the core network (106, 108) comprises a home subscriber server or a mobility management entity (200).

13. A computer program product comprising a computer program including instructions executing the method of one of claims 1 to 12 when running the computer program on a computer.

14. A node (100) for a radio access network (114) of a wireless communication system,
wherein the node (100) is configured to be coupled to a core network (106, 108) of the wireless communication system, and to a plurality of remote radio units (102a-c),
wherein the node (100) is configured to transmit data between terminals (UE1, UE2) of the wireless communication system co-located in a common coverage area in accordance with the method of one of claims 1 to 12.

15. A wireless communication system, comprising:
a core network (106, 108);
at least one node (100) coupled to the core network (106, 108);
a plurality of remote radio units (102a-c) coupled to the node (100); and
a plurality of terminals (UE1, UE2) coupled to the remote radio unit (102a-c),
wherein the wireless communication system is configured to transmit data between the terminals (UE1, UE2) co-located in a common coverage area in accordance with the method of one of claims 1 to 12.

## Patentansprüche

1. Ein Verfahren zum Senden von Daten von einem ersten Anschluss (UE1) eines drahtlosen Kommunikationssystems an einen zweiten Anschluss (UE2) des drahtlosen Kommunikationssystems, wobei das drahtlose Kommunikationssystem ein Kernnetz (106, 108) und zumindest ein Funkzugangsnetz (114) aufweist, das mit dem Kernnetz (106, 108) gekoppelt ist, wobei das Verfahren folgende Schritte aufweist:
Senden von Daten von einem ersten Anschluss (UE1) des drahtlosen Kommunikationssystems an einen zweiten Anschluss (UE2) des drahtlosen Kommunikationssystems, wobei der erste und der zweite Anschluss (UE1, UE2) gemeinsam angeordnet sind in einem gemeinsamen Abdeckungsbereich des zumindest einen Funkzugangsnetzes (114),
wobei die Daten von dem ersten Anschluss (UE1) über die Entitäten (100, 102a - c,
104a - c) des zumindest einen Funkzugangsnetzes (114) an den zweiten Anschluss (UE2) gesendet werden, ohne das zumindest eine Funkzugangsnetz (114) zu verlassen, und
wobei das Senden der Daten das Verbinden, an einem Knoten (100) des Funkzugangsnetzes (114), des Aufwärtsverbindungskanals zwischen dem ersten Anschluss (UE1) und dem Knoten (100) und des Abwärtsverbindungskanals zwischen dem Knoten (100) und dem zweiten Anschluss (UE2) aufweist.

2. Das Verfahren gemäß Anspruch 1,
bei dem die Entitäten (100, 102a - c, 104a - c) des zumindest einen Funkzugangsnetzes (114) den Knoten (100) gekoppelt mit dem Kernnetz (106, 108) und eine Mehrzahl von entfernten Funkeinheiten (102a - c) aufweisen, wobei jede entfernte Funkeinheit (102a - c) mit dem Knoten (100) gekoppelt ist,
wobei die zumindest zwei Anschlüsse (UE1, UE2) mit den entfernten Funkeinheiten (102a - c) gekoppelt sind, und
wobei Daten von dem ersten Anschluss (UE1) entlang einem Datenweg (118), der den Knoten (100) und die entfernten Funkeinheiten (102a - c) aufweist, an den zweiten Anschluss (UE2) gesendet werden.

3. Das Verfahren gemäß Anspruch 1 oder 2,
bei dem der Knoten (100) einen gemeinsamen Satz von Parametern für die Datenübertragung zuweist und dieselben an die Anschlüsse (UE1, UE2) signalisiert, und
wobei die Anschlüsse (UE1, UE2) Daten auf der Basis der durch den Knoten (100) signalisierten Parameter senden/empfangen.

4. Das Verfahren gemäß Anspruch 2 oder 3, das folgende Schritte aufweist:
Bestimmen eines Ursprungsanschlusses (UE1) und eines Bestimmungsanschlusses (UE2) in dem gemeinsamen Abdeckungsbereich des zumindest einen Funkzugangsnetzes (114);
wobei das Senden von Daten das Weiterleiten von Daten von dem Ursprungsanschluss (UE1) an den Bestimmungsanschluss (UE2) aufweist, wobei der Datenweg (118) eine Aufwärtsverbindung zwischen dem Ursprungsanschluss (UE1) und dem Knoten (100) und eine Abwärtsverbindung zwischen dem Knoten (100) und dem Bestimmungsanschluss (UE2) aufweist; und
gemeinsames Zuordnen einer Ressource und/oder Auswählen eines Modulationsund Codierschemas für den Datenweg (118) auf der Basis der Aufwärtsverbindungs- und Abwärtsverbindungsressourcen für den Ursprungs- und Bestimmungsanschluss (UE1, UE2).

5. Das Verfahren gemäß Anspruch 4, bei dem das gemeinsame Zuordnen einer Ressource und/oder das Auswählen eines Modulations- und Codierschemas ein Zuordnen von Ressourcen für die Aufwärtsverbindung und die Abwärtsverbindung aufweist, und/oder ein Auswählen eines gemeinsamen Modulations- und Codierschemas für die Aufwärtsverbindung und für die Abwärtsverbindung.

6. Das Verfahren gemäß Anspruch 4 oder 5, bei dem das Zuordnen einer Ressource folgenden Schritt aufweist:
Um-Abbilden der Ressourcen, die der Aufwärtsverbindung und der Abwärtsverbindung zugeordnet sind, sodass ein effektiver Kanal zwischen dem Ursprungsanschluss (UE1) und dem Bestimmungsanschluss (UE2), der einen Aufwärtsverbindungskanal zwischen dem Ursprungsanschluss (UE1) und dem Knoten (100) und
einen Abwärtsverbindungskanal zwischen dem Knoten (100) und dem Bestimmungsanschluss (UE2) aufweist, ein vorbestimmtes Kriterium erfüllt.

7. Das Verfahren gemäß Anspruch 6, bei dem das vordefinierte Kriterium auf dem Produkt der Kanalkoeffizienten basiert, die die Kanalqualität des Aufwärtsverbindungskanals und des Abwärtsverbindungskanals beschreiben.

8. Das Verfahren gemäß Anspruch 7, bei dem das Um-Abbilden das Um-Abbilden der Aufwärtsverbindung und der Abwärtsverbindung aufweist, sodass ein Maximum des Produkts erreicht wird.

9. Das Verfahren gemäß einem der Ansprüche 6 bis 8, das folgende Schritte aufweist:
Weiterleiten eines Referenzsignals von dem Ursprungsanschluss (UE1) an den Bestimmungsanschluss (UE2), und
Schätzen des effektiven Kanals an dem Bestimmungsanschluss (UE2).

10. Das Verfahren gemäß einem der Ansprüche 1 bis 9, bei dem jedem der Anschlüsse (UE1, UE2) eine eindeutige ID zugeordnet ist, die an dem Anschluss (UE1) und an einer Entität (200) des Kernnetzes (106, 108) gespeichert ist, wobei das Verfahren folgende Schritte aufweist:
Bestimmen des Ursprungsanschlusses (UE1) und des Bestimmungsanschlusses (UE2) in dem gemeinsamen Abdeckungsbereich des Funkzugangsnetzes (114) auf der Basis der eindeutigen IDs.

11. Das Verfahren gemäß Anspruch 10, das folgende Schritte aufweist:
falls der Ursprungsanschluss (UE1) eine Sitzung mit dem Bestimmungsanschluss (UE2) einrichten möchte, Weiterleiten der eindeutigen ID des Bestimmungsanschlusses (UE2) an die Entität (200) des Kernnetzes (106, 108);
Prüfen an der Entität (200) des Kernnetzes (106, 108), ob sich der Bestimmungsanschluss (UE2) in dem gleichen Abdeckungsbereich des Funkzugangsnetzes (114) befindet, in dem sich der Ursprungsanschluss (UE1) befindet; und
falls sich der Ursprungsanschluss (UE1) und der Bestimmungsanschluss (UE2) in einem gleichen Abdeckungsbereich befinden, Anweisen des Knotens (100) durch die Entität (200) des Kernnetzes (106, 108), das Weiterleiten der Daten auszuführen.

12. Das Verfahren gemäß Anspruch 10 oder 11, bei dem die eindeutige ID eine eindeutige Identifikationszahl, eine IP-Adresse oder eine SIP-Adresse aufweist, und wobei die Entität des Kernnetzes (106, 108) einen Heim-Teilnehmerserver oder eine Mobilitätsverwaltungsentität (200) aufweist.

13. Ein Computerprogrammprodukt, das ein Computerprogramm aufweist, das Anweisungen umfasst, die das Verfahren gemäß einem der Ansprüche 1 bis 12 ausführt, wenn das Computerprogramm auf einem Computer läuft.

14. Ein Knoten (100) für ein Funkzugangsnetz (114) eines drahtlosen Kommunikationssystems, wobei der Knoten (100) konfiguriert ist, um mit einem Kernnetz (106, 108) des drahtlosen Kommunikationssystems und mit einer Mehrzahl von entfernten Funkeinheiten (102a - c) gekoppelt zu werden,
wobei der Knoten (100) konfiguriert ist, um Daten zwischen Anschlüssen (UE1, UE2) des drahtlosen Kommunikationssystems, die gemeinsam in einem gemeinsamen Abdeckungsbereich angeordnet sind, entsprechend dem Verfahren gemäß einem der Ansprüche 1 bis 12 zu senden.

15. Ein drahtloses Kommunikationssystem, das folgende Merkmale aufweist:
ein Kernnetz (106, 108);
zumindest einen Knoten (100), der mit dem Kernnetz (106, 108) gekoppelt ist;
eine Mehrzahl von entfernten Funkeinheiten (102a - c), die mit dem Knoten (100) gekoppelt sind; und
eine Mehrzahl von Anschlüssen (UE1, UE2), die mit der entfernten Funkeinheit (102a - c) gekoppelt sind, wobei das drahtlose Kommunikationssystem konfiguriert ist, um Daten zwischen den Anschlüssen (UE1, UE2), die gemeinsam in einem gemeinsamen Abdeckungsbereich angeordnet sind, entsprechend dem Verfahren gemäß einem der Ansprüche 1 bis 12 zu senden.

## Revendications

1. Procédé de transmission de données d'un premier terminal (UE1) d'un système de communication sans fil à un deuxième terminal (UE2) du système de communication sans fil, le système de communication sans fil comprenant un réseau central (106, 108) et au moins un réseau d'accès par radio (114) couplé au réseau central (106, 108), le procédé comprenant le fait de:
transmettre les données d'un premier terminal (UE1) du système de communication sans fil à un deuxième terminal (UE2) du système de communication sans fil, les premier et deuxième terminaux (UE1, UE2) étant situés ensemble dans une zone de couverture commune de l'au moins un réseau d'accès par radio (114),
dans lequel les données sont transmises du premier terminal (UE1) au deuxième terminal (UE2) par l'intermédiaire d'entités (100, 102a-c, 104a-c) de l'au moins un réseau d'accès par radio (114) sans sortir de l'au moins un réseau d'accès par radio (114), et
dans lequel les données comprennent le fait de connecter, à un noeud (100) du réseau d'accès par radio (114), le canal de liaison ascendant entre le premier terminal (UE1) et le noeud (100) et le canal de liaison descendant entre le noeud (100) et le deuxième terminal (UE2).

2. Procédé selon la revendication 1,
dans lequel les entités (100, 102a-c, 104a-c) de l'au moins un réseau d'accès par radio (114) comprend le noeud (100) couplé au réseau central (106, 108) et une pluralité d'unités radio éloignées (102a-c), chaque unité de radio éloignée (102a-c) étant couplée au noeud (100),
dans lequel les au moins deux terminaux (UE1, UE2) sont couplés aux unités radio éloignées (102a-c), et
dans lequel les données sont transmises du premier terminal (UE1) au deuxième terminal (UE2) le long d'un trajet de données (118) comprenant le noeud (100) et les unités radio éloignées (102a-c).

3. Procédé selon la revendication 1 ou 2,
dans lequel le noeud (100) attribue un ensemble commun de paramètres pour la transmission de données et les signale aux terminaux (UE1, UE2), et
dans lequel les terminaux (UE1, UE2) transmettent/reçoivent les données sur base des paramètres signalés par le noeud (100).

4. Procédé selon la revendication 2 ou 3, comprenant le fait de:
déterminer un terminal de source (UE1) et un terminal de destination (UE2) dans la zone de couverture commune de l'au moins un réseau d'accès par radio (114);
dans lequel la transmission de données comprend l'envoi de données du terminal de source (UE1) au terminal de destination (UE2), où le trajet de données (118) comprend une liaison ascendante entre le terminal de source (UE1) et le noeud (100), et une liaison descendante entre le noeud (100) et le terminal de destination (UE2); et
attribuer conjointement une ressource et/ou sélectionner un schéma de modulation et de codage pour le trajet de données (118) sur base des ressources de liaison ascendante et de liaison descendante pour les terminaux de source et de destination (UE1, UE2).

5. Procédé selon la revendication 4, dans lequel l'attribution conjointe d'une ressource et/ou la sélection d'un schéma de modulation et de codage comprend le fait d'attribuer des ressources pour la liaison ascendante et pour la liaison descendante, et/ou de sélectionner un schéma de modulation et de codage commun pour la liaison ascendante et pour la liaison descendante.

6. Procédé selon la revendication 4 ou 5, dans lequel l'attribution d'une ressource comprend:
remapper les ressources associées à la liaison ascendante et la liaison descendante de sorte qu'un canal effectif entre le terminal de source (UE1) et le terminal de destination (UE2) comprenant un canal de liaison ascendante entre le terminal de source (UE1) et le noeud (100) et un canal de liaison descendante entre le noeud (100) et le terminal de destination (UE2) remplissent un critère prédéfini.

7. Procédé selon la revendication 6, dans lequel le critère prédéfini est basé sur le produit des coefficients de canal décrivant la qualité du canal de liaison ascendante et du canal de liaison descendante.

8. Procédé selon la revendication 7, dans lequel le remappage comprend le fait de remapper la liaison ascendante et la liaison descendante de sorte que soit obtenu un maximum de produit.

9. Procédé selon l'une des revendications 6 à 8, comprenant le fait:
d'envoyer un signal de référence du terminal de source (UE1) au terminal de destination (UE2), et
d'estimer le canal effectif au terminal de destination (UE2).

10. Procédé selon l'une des revendications 1 à 9, dans lequel chacun des terminaux (UE1, UE2) présente, y associée, une ID unique mémorisée au terminal (UE1, UE2) et à une entité (200) du réseau central (106, 108), le procédé comprenant le fait de:
déterminer le terminal de source (UE1) et le terminal de destination (UE2) dans la zone de couverture commune du réseau d'accès par radio (114) sur base des ID uniques.

11. Procédé selon la revendication 10, comprenant:
au cas où le terminal de source (UE1) désire établir une session avec le terminal de destination (UE2), envoyer l'ID unique du terminal de destination (UE2) à l'entité (200) du réseau central (106, 108);
vérifier à l'entité (200) du réseau central (106, 108) si le terminal de destination (UE2) réside dans la même zone de couverture du réseau d'accès par radio (114) dans laquelle réside le terminal de source (UE1); et
au cas où le terminal de source (UE1) et le terminal de destination (UE2) résident dans une zone de couverture commune, donner instruction au noeud (100), par l'entité (200) du réseau central (106, 108), de réaliser l'envoi des données.

12. Procédé selon la revendication 10 ou 11, dans lequel l'ID unique comprend un numéro d'identification unique, une adresse IP, ou une adresse SIP, et dans lequel l'entité du réseau central (106, 108) comprend un serveur d'abonnés domestiques ou une entité de gestion de mobilité (200).

13. Programme d'ordinateur comprenant un programme d'ordinateur comportant des instructions pour réaliser le procédé selon l'une des revendications 1 à 12 lorsque le programme d'ordinateur est exécuté sur un ordinateur.

14. Noeud (100) pour un réseau d'accès par radio (114) d'un système de communication sans fil,
dans lequel le noeud (100) est configuré pour être couplé à un réseau central (106, 108) du système de communication sans fil, et à une pluralité d'unités radio éloignées (102a-c),
dans lequel le noeud (100) est configuré pour transmettre des données entre terminaux (UE1, UE2) du système de communication sans fil situés ensemble dans une zone de couverture commune selon le procédé de l'une des revendications 1 à 12.

15. Système de communication sans fil, comprenant:
un réseau central (106, 108);
au moins un noeud (100) couplé au réseau central (106, 108);
une pluralité d'unités radio éloignées (102a-c) couplées au noeud (100); et
une pluralité de terminaux (UE1, UE2) couplés à l'unité radio éloignée (102a-c),
dans lequel le système de communication sans fil est configuré pour transmettre des données entre les terminaux (UE1, UE2) situés ensemble dans une zone de couverture commune selon le procédé de l'une des revendications 1 à 12.
